# FASCICULE DE BREVET EUROPEEN

(11) **EP 2 861 813 B1**
(45) Date de publication et mention de la délivrance du brevet: **27.12.2017**
(21) Numéro de dépôt: 13730189.1
(22) Date de dépôt: 13.06.2013
(51) Int. Cl.: E06B 9/72

(54) **ÉLEMENT DE SUPPORT D'UNE BATTERIE DANS UN TUBE D'ENROULEMENT D'UN ECRAN DOMOTIQUE**
BATTERIEANORDNUNG IN DER WICKELWELLE EINES BEHANGS
BATTERY ARRANGEMENT IN THE WINDING SHAFT OF A ROLLER SHADE

(30) Priorité: 13.06.2012 FR 1255522
(43) Date de publication de la demande: 22.04.2015
(73) Titulaire: SOMFY ACTIVITES SA, 74300 Cluses (FR)
(72) Inventeur: LEMAITRE, Sébastien, F-74300 Cluses (FR); PEILLEX, Julien, F-74300 Cluses (FR)
(74) Mandataire: Novaimo
(86) Numéro de dépôt international: PCT/EP2013/062297
(87) Numéro de publication internationale: WO 2013/186319

(56) Documents cités:
- WO-A1-2010/101495
- KR-A- 20100 118 723
- US-A1- 2010 269 988

## Description

L'invention concerne un élément de support d'un dispositif d'alimentation incluant un élément de stockage d'énergie électrique utilisé dans un système domotique de manoeuvre d'un écran mobile. L'invention porte aussi sur un ensemble comprenant un dispositif d'alimentation incluant un élément de stockage et un élément de support de ce dispositif d'alimentation. L'invention porte encore sur un système domotique motorisé de manoeuvre d'un écran mobile.
Un système domotique motorisé de manoeuvre d'un écran mobile peut être autonome, c'est-à-dire qu'il embarque sa propre source d'énergie électrique, sans prélever en permanence d'énergie sur un réseau de distribution d'énergie électrique. Dans un tel système, on utilise un dispositif d'alimentation comprenant un élément de stockage d'énergie électrique comme une ou plusieurs piles ou un ou plusieurs accumulateurs rechargeables. Les accumulateurs rechargeables peuvent par exemple être rechargés à l'aide d'un panneau photovoltaïque convertissant de l'énergie solaire en énergie électrique.
La mise en place du dispositif d'alimentation est généralement complexe. Les éléments du dispositif d'alimentation (panneaux photovoltaïques et éléments de stockage d'énergie) peuvent être disposés à distance de l'écran mobile enroulable, alors qu'un actionneur d'entraînement en rotation du tube d'enroulement est par exemple disposé dans le tube d'enroulement. Alternativement, les éléments de stockage d'énergie sont également disposés dans le tube d'enroulement, mais leur mise en place, leur remplacement posent des soucis. Il est généralement nécessaire de démonter tout le système domotique pour pouvoir les changer.

Une autre solution, divulguée par le brevet US 2010/0269988 A1, utilise un elément de support d'une d'alimentation selon le préambule de la revendication 1. Le but de l'invention est de fournir un élément de support d'un dispositif d'alimentation électrique remédiant aux inconvénients mentionnés et simplifiant le montage et démontage. Par ailleurs, un autre but de l'invention est de fournir un élément de support pouvant convenir à différentes architectures de système domotique à tube d'enroulement, notamment un système de manoeuvre classique pour lequel le tube d'enroulement est maintenu en position fixe par rapport à un bâti aussi bien qu'un système domotique de manoeuvre d'un écran dont le tube d'enroulement est suspendu à la toile et donc déplaçable par rapport à la structure du bâtiment.
En particulier, l'invention propose un élément de support simple, fiable, et polyvalent.
Selon l'invention, un élément permet de supporter un dispositif d'alimentation propre comprenant un élément de stockage d'énergie électrique et destiné à l'alimentation d'un actionneur de manoeuvre d'un écran mobile. L'actionneur provoque le mouvement en rotation d'un arbre d'entraînement. L'élément de support comprend un corps muni d'un alésage, destiné à recevoir au moins une partie du dispositif d'alimentation et muni d'une fente longitudinale sur au moins une partie du corps permettant sa déformation aisée pour l'introduction du dispositif d'alimentation et lorsqu'il est lui-même introduit dans l'alésage. L'élément de support peut comprendre une tige de support.
La tige de support peut s'étendre au moins partiellement le long du corps et peut être diamétralement opposée à la fente longitudinale.
La tige de support peut s'étendre au-delà du corps sur au moins deux fois la longueur du corps.

L'élément de support peut comprendre une tête comprenant des encoches de préhension.

L'élément de support peut comprendre des cannelures, notamment des cannelures longitudinales, sur son diamètre extérieur.

L'alésage peut comprendre des cannelures, notamment des cannelures longitudinales.

Le corps peut comprendre une portion externe conique, notamment une portion externe conique à une de ces extrémités, en particulier une portion externe conique à l'extrémité opposée à la tête.

Selon l'invention, un ensemble comprend un élément de support tel que défini précédemment et un dispositif d'alimentation comprenant au moins un élément de stockage d'énergie électrique, le dispositif d'alimentation comprenant une conformation destinée à coopérer avec l'élément de support, notamment le dispositif d'alimentation comprenant une conformation complémentaire à l'alésage et/ou à la fente.

Le dispositif d'alimentation peut comprendre au moins un fil électrique courant le long du au moins un élément de stockage depuis une de ses bornes à une extrémité du dispositif d'alimentation vers l'autre extrémité du dispositif d'alimentation, le fil électrique créant une surépaisseur locale se logeant dans la fente de l'élément de support.

Selon l'invention, un système motorisé de manoeuvre destiné à la manoeuvre d'un écran mobile enroulable comprend un flasque présentant un alésage recevant un ensemble tel que défini précédemment, tel que celui-ci est monté serré dans l'alésage.

Le système peut comprendre un tube d'enroulement monté mobile à rotation sur le flasque ou sur un palier du flasque,

Le système peut comprendre un actionneur de manoeuvre du tube d'enroulement, en particulier un actionneur de manoeuvre du tube d'enroulement disposé à une extrémité du tube d'enroulement, l'actionneur de manoeuvre étant par exemple alimenté par le dispositif d'alimentation, celui-ci étant disposé à l'autre extrémité du tube d'enroulement.

Le flasque peut comprendre un couvercle obturant l'alésage.
La figure 1 est une représentation d'un premier mode de réalisation d'un système domotique motorisé de manoeuvre d'un écran mobile.
La figure 2 est une représentation d'un deuxième mode de réalisation d'un système domotique motorisé de manoeuvre d'un écran mobile.
La figure 3 représente en coupe un système domotique motorisé de manoeuvre d'un écran mobile, le système comprenant un premier mode de réalisation d'un élément de support d'un dispositif d'alimentation incluant un élément de stockage d'énergie électrique dans un tube d'enroulement d'un écran.
La figure 4 représente en perspective un deuxième mode de réalisation d'un élément de support d'un dispositif d'alimentation incluant un élément de stockage d'énergie électrique dans un tube d'enroulement d'un écran.

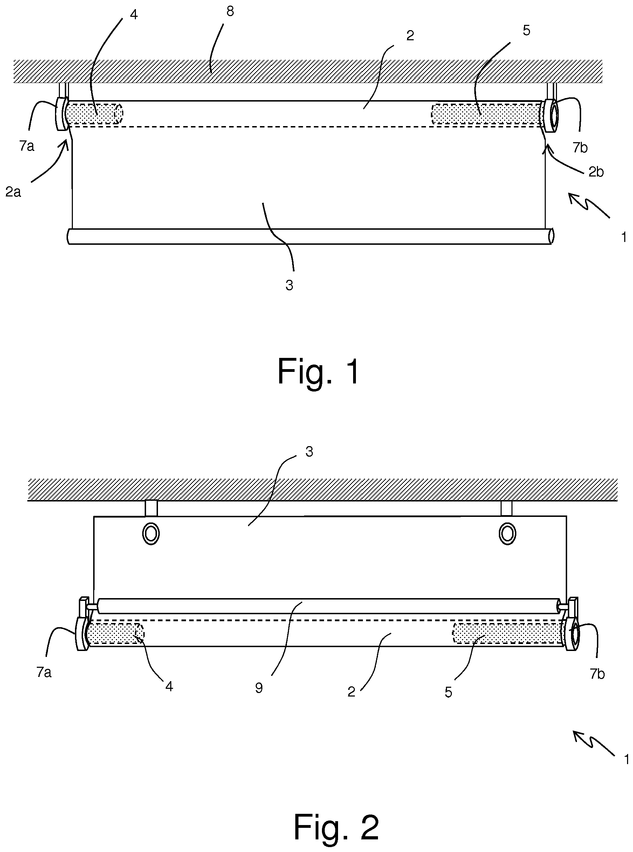

Un mode de réalisation d'un système domotique motorisé de manoeuvre 1, représenté à la figure 1, permet la manoeuvre motorisée d'un écran mobile 3, notamment un écran enroulable autour d'un tube d'enroulement 2, tel qu'un store. Il est notamment prévu pour être utilisé pour occulter ou restreindre la pénétration de soleil par une ouverture d'un bâtiment.

Le système domotique ou système d'écran motorisé comprend un actionneur 4 de manoeuvre du tube d'enroulement. Cet actionneur est de préférence disposé partiellement ou totalement dans le tube d'enroulement. L'actionneur de manoeuvre est dit autonome, c'est-à-dire qu'il est alimenté par un dispositif d'alimentation 5 propre comprenant un élément de stockage d'énergie électrique 6. L'actionneur de manoeuvre est inséré dans le tube d'enroulement, à une de ses extrémités, tandis que le dispositif d'alimentation est inséré dans le tube d'enroulement, à son autre extrémité.

L'actionneur met en mouvement le tube d'enroulement de manière connue. L'écran mobile est accroché par une de ses extrémités au tube. Ainsi, la rotation du tube d'enroulement entraîne, selon son sens, l'enroulement ou le déroulement de l'écran sur le tube.

Le système 1 comprend deux flasques 7a, 7b de part et d'autre du tube d'enroulement. Ces flasques servent au maintien du système d'écran motorisé sur une structure ou bâti fixe 8, par exemple un plafond ou un mur. Dans ce premier mode de réalisation, le tube d'enroulement demeure fixe (hors de sa rotation autour de son axe) relativement à la structure du bâtiment et la toile s'enroule autour de ce tube d'enroulement.

Dans un deuxième mode de réalisation représenté en figure 2, le système d'écran motorisé est destiné à être lié à la structure du bâtiment exclusivement par l'écran, c'est-à-dire que le système d'écran motorisé est un système suspendu par l'écran et dont le tube d'enroulement se translate, notamment se translate verticalement, au fil de l'enroulement ou du déroulement de l'écran. Ainsi, toutes les reprises d'efforts exercées sur le système sont assurées par l'écran. De préférence, aucun autre contact ou liaison entre le système et le bâtiment n'existe. Les flasques servent alors à maintenir le tube d'enroulement relativement à l'écran, notamment grâce à une barre 9 de reprise de couple de rotation en contact avec l'écran et maintenue entre les flasques.

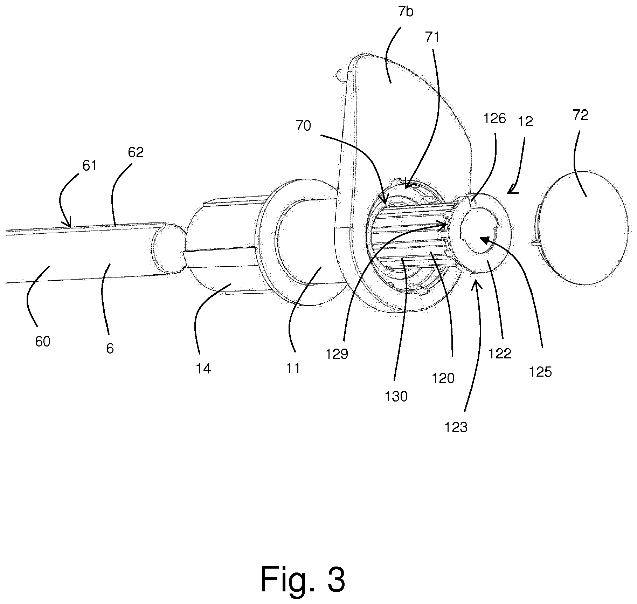

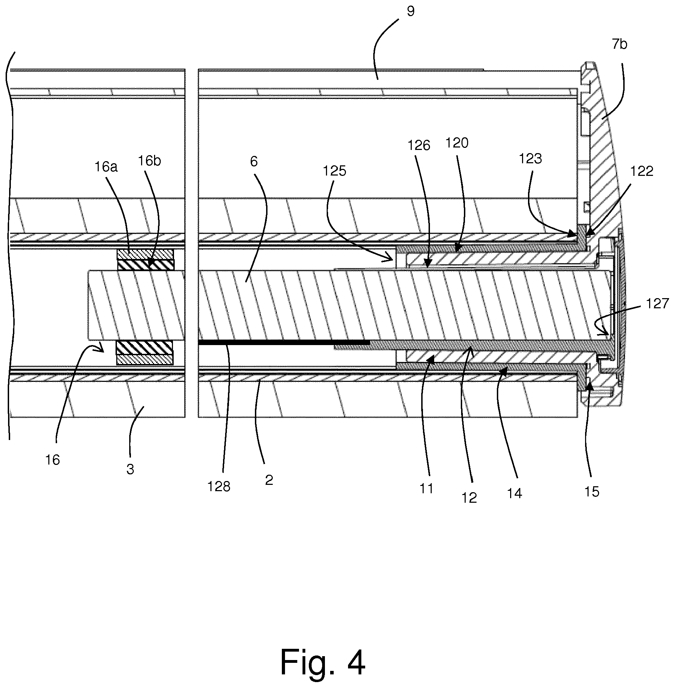

Comme représenté en figures 3 et 4, un cylindre creux 11 s'étend d'un des flasques 7b pour recevoir dans sa partie interne un élément de support 12 permettant de supporter le dispositif d'alimentation comprenant l'élément de stockage d'énergie électrique. L'élément de support peut être plus long que le cylindre creux du flasque. Le tube d'enroulement est guidé en rotation sur la partie externe du cylindre creux du flasque 7b soit directement, soit sur un palier 14 rapporté, par exemple un palier lisse comme une bague autolubrifiante. Le palier est par exemple monté glissant sur le cylindre creux du flasque. Le palier est par exemple emmanché jusqu'en butée contre un épaulement 6 du flasque. Le tube d'enroulement est monté glissant sur le palier.

L'élément de support supporte le dispositif d'alimentation électrique. Pour ce faire, il comprend un corps 120 de support agencé pour maintenir le dispositif d'alimentation complètement ou partiellement à l'intérieur du tube d'enroulement.

L'élément de stockage d'énergie comprend par exemple un ensemble de piles ou un ensemble d'accumulateurs (non représentés). Cet ensemble est avantageusement enfermé dans une enveloppe 60. L'enveloppe permet par exemple de maintenir les différents accumulateurs ou les différentes piles en contact, notamment en contact galvanique, les uns avec les autres, ainsi que de protéger un ou des fils électriques 61 permettant de rapporter la borne de sortie de l'élément de stockage d'énergie vers la borne d'entrée. L'enveloppe peut aussi assurer une rigidité à la flexion de l'ensemble. Par exemple, elle peut assurer que la flèche du dispositif d'alimentation sous son propre poids soit inférieure à 4 mm, lorsqu'il est maintenu à l'horizontale par une seule de ses extrémités. L'enveloppe est par exemple en matière synthétique, comme du plastique, ou en métal léger, comme de l'aluminium. Le dispositif d'alimentation présente une forme globalement cylindrique sur toute sa longueur ou sur une portion de celle-ci seulement. On entend par cylindrique sa définition mathématique, c'est-à-dire ayant la forme d'un cylindre qui est une surface générée par un ensemble de lignes génératrices parallèles s'appuyant sur une courbe directrice fermée. Le cylindre est de préférence de révolution et donc présente une base circulaire, mais peut aussi présenter une base ovale ou polygonale. Il comprend notamment une surépaisseur 62 au niveau du passage du fil électrique. Le dispositif d'alimentation comprend également des connecteurs électriques (non représentés), en liaison avec une borne d'entrée et une borne de sortie de l'élément de stockage, notamment via le fil électrique.

La longueur du dispositif d'alimentation est dépendante de la tension choisie (par exemple 5V ou 12V) pour un même diamètre. La longueur peut avoir un effet sur la flèche : si besoin, une bague-palier 16 peut être utilisée pour supporter l'extrémité libre du dispositif d'alimentation. Une première bague 16a est en liaison avec le tube d'enroulement. Cette première bague intègre une deuxième bague 16b libre en rotation par rapport à la première. L'extrémité libre peut être montée flottante dans la deuxième bague. Elle est ainsi insérée facilement lors d'un remplacement du dispositif d'alimentation.

L'élément de support comprend outre le corps 120, éventuellement une tête 122, à l'extrémité du corps, formant un épaulement 123.

L'élément de support comprend un alésage 125. L'alésage est pratiqué dans le corps, et notamment le long du corps. Cet alésage est destiné à coopérer avec le dispositif d'alimentation afin de maintenir et supporter celui-ci. L'alésage coopère en particulier avec la forme cylindrique de l'élément de stockage d'énergie. Le corps est notamment pourvu d'une fente longitudinale 126 permettant sa déformation aisée pour l'introduction du dispositif d'alimentation et lorsqu'il est lui-même introduit dans l'alésage. La fente s'étend par exemple sur une partie ou sur toute la longueur de l'élément de support. Elle permet également d'accommoder la surépaisseur du fil électrique du dispositif d'alimentation.

Avantageusement, l'alésage est traversant, il permet ainsi de recevoir les connecteurs électriques du dispositif d'alimentation, par exemple au niveau de la tête de l'élément de support. Il peut être de diamètre inférieur au niveau de la tête, de sorte à former une butée 127 lorsque le dispositif d'alimentation est introduit dans l'élément de support.

La fente peut s'étendre uniquement le long du corps et être prolongée par une gorge interne au niveau de l'épaulement.

Lors du montage du dispositif d'alimentation dans l'élément de support, le dispositif d'alimentation est introduit dans l'alésage, en présentant l'extrémité comprenant les connecteurs vers l'alésage et en orientant la surépaisseur dans le prolongement de la fente longitudinale. Le dispositif d'alimentation est ensuite glissé dans l'élément de support. Le maintien du dispositif d'alimentation dans l'élément de support se fait par coopération de forme et par serrage, l'élément de support se déformant légèrement, grâce à sa fente longitudinale. En effet, le diamètre interne de l'alésage au repos est légèrement inférieur au diamètre externe de l'enveloppe cylindrique du dispositif d'alimentation.

L'alésage peut présenter des cannelures (non représentées), notamment des cannelures s'étendant longitudinalement, pour améliorer cette fonction de serrage et de support. Alternativement ou complémentairement aux cannelures, l'alésage peut présenter des crantages ou un moletage.

L'élément de support peut comprendre une tige de support 128. La tige de support s'étend depuis le corps. En particulier, la tige est agencée pour s'étendre parallèlement ou sensiblement parallèlement à l'axe du tube d'enroulement et/ou à l'axe de l'élément de stockage d'énergie. La tige de support, ne subissant aucune déformation lors du montage, peut être en matériau plus rigide que celui formant l'élément de support.

Le flasque 7b et/ou son palier, comprend également un alésage 70. Cet alésage est destiné à coopérer avec l'élément de support. L'alésage du flasque coopère en particulier avec la forme extérieure du corps. L'alésage est de préférence traversant, formant une ouverture 71 sur la partie externe du flasque, refermable par un couvercle 72. Cette ouverture permet d'accéder à l'élément de support sans démonter le reste du système. Avantageusement, la tête de l'élément de support comprend des encoches 129 de préhension. Ces encoches permettent notamment le passage d'un outil, comme un tournevis plat, permettant d'agir sur la tête, notamment par une action de levier, pour ressortir l'élément de support, et donc le dispositif d'alimentation, de l'alésage du flasque.

L'ouverture pratiquée dans le flasque constitue une première partie de plus grand diamètre, destinée à recevoir la tête de l'élément de support, et l'alésage, une deuxième partie dont le diamètre interne est sensiblement égal au diamètre externe du corps. La coopération entre la deuxième partie de l'alésage et l'élément de support se fait par serrage et déformation de l'élément de support dans l'alésage. La forme extérieure du corps peut présenter des cannelures 130, notamment des cannelures s'étendant longitudinalement, pour améliorer cette fonction de serrage.

Dans une variante ou de manière complémentaire, le corps peut comprendre une portion externe conique, notamment une portion externe conique à une de ces extrémités, en particulier une portion externe conique à l'extrémité opposée à la tête. Cette portion conique peut présenter un angle au sommet de 0,5° (dépouille) ou supérieur à 1 ° si souhaité. Cette portion conique permet de faciliter l'introduction ou le retrait de l'élément de support de l'alésage du flasque.

Ainsi, on met en place le dispositif d'alimentation et l'élément de support dans le tube d'enroulement comme suit :
- On met en place le dispositif d'alimentation dans l'alésage de l'élément de support comme décrit ci-dessus. Il se produit alors une légère déformation de l'élément de support, son diamètre extérieur augmentant, notamment par élargissement de la fente.
- On met en place l'ensemble formé par l'élément de support et le dispositif d'alimentation dans l'alésage du flasque, en appliquant un effort axial sur cet ensemble. Il se produit alors une légère déformation de l'élément de support, son diamètre extérieur diminuant en comprimant le dispositif d'alimentation, notamment par resserrement de la fente. Ainsi, du fait du frottement ou des éventuels crans ou moletage à l'interface élément de support - le dispositif d'alimentation, on obtient une bonne liaison mécanique de fixation du dispositif d'alimentation au flasque. De même, du fait du frottement à l'interface élément de support - flasque, on obtient une bonne liaison mécanique de fixation du dispositif d'alimentation au flasque.
- On raccorde les connecteurs électriques du dispositif d'alimentation aux fils d'alimentation de l'actionneur.
- On referme le couvercle de l'ouverture du flasque.

Pour le changement de piles, ou en cas de défaillance des accumulateurs du dispositif d'alimentation, les étapes ci-dessus sont exécutées de manière inversée.

L'invention s'applique également dans le cadre d'un élément mobile non enroulable sur le tube, par exemple un store de type plissé ou bouillonné de type inversé, dont les cordons s'enroulent sur le tube contenant le dispositif d'alimentation. Elle s'applique également dans le cadre d'un écran de type battant (volet ou portail), dont le dispositif d'alimentation serait logé dans un tube d'actionnement, par exemple un tube positionné au niveau des gonds.

## Revendications

1. Elément (12) de support d'un dispositif d'alimentation (5) comprenant un élément de stockage d'énergie électrique (6) et destiné à l'alimentation d'un actionneur (4) de manoeuvre d'un écran mobile (3), l'actionneur provoquant le mouvement en rotation d'un arbre d'entraînement, l'élément de support comprenant un corps (120) muni d'un alésage (125), destiné à recevoir au moins une partie du dispositif d'alimentation, **caractérisé en ce que** l'élément de support comprend une fente (126) longitudinale sur au moins une partie du corps, la fente longitudinale (126) permettant la déformation aisée du corps pour l'introduction du dispositif d'alimentation et lorsqu'il est lui-même introduit dans l'alésage.

2. Elément de support selon la revendication précédente, **caractérisé en ce qu'**il comprend une tige de support (128).

3. Elément de support selon la revendication précédente, **caractérisé en ce que** la tige de support s'étend au moins partiellement le long du corps et est diamétralement opposée à la fente longitudinale.

4. Elément de support selon l'une des revendications 2 ou 3, **caractérisé en ce que** la tige de support s'étend au-delà du corps sur au moins deux fois la longueur du corps.

5. Elément de support selon l'une des revendications précédentes, **caractérisé en ce qu'**il comprend une tête (122) comprenant des encoches (129) de préhension.

6. Elément de support selon l'une des revendications précédentes, **caractérisé en ce qu'**il comprend des cannelures (130), notamment des cannelures longitudinales, sur son diamètre extérieur.

7. Elément de support selon l'une des revendications précédentes, **caractérisé en ce que** l'alésage comprend des cannelures, notamment des cannelures longitudinales.

8. Elément de support selon l'une des revendications précédentes, **caractérisé en ce que** le corps comprend une portion externe conique, notamment une portion externe conique à une de ces extrémités, en particulier une portion externe conique à l'extrémité opposée à la tête.

9. Ensemble comprenant un élément de support (12) selon l'une des revendications précédentes et un dispositif d'alimentation (5) comprenant au moins un élément (6) de stockage d'énergie électrique, le dispositif d'alimentation comprenant une conformation destinée à coopérer avec l'élément de support, notamment le dispositif d'alimentation comprenant une conformation complémentaire à l'alésage (125) et/ou à la fente (126).

10. Ensemble selon la revendication précédente, **caractérisé en ce que** le dispositif d'alimentation comprend au moins un fil électrique (61) courant le long du au moins un élément de stockage depuis une de ses bornes à une extrémité du dispositif d'alimentation vers l'autre extrémité du dispositif d'alimentation, le fil électrique créant une surépaisseur (62) locale se logeant dans la fente de l'élément de support.

11. Système (1) motorisé de manoeuvre destiné à la manoeuvre d'un écran mobile enroulable (3) comprenant un flasque (7b) présentant un alésage (71) recevant un ensemble selon l'une des revendications 9 ou 10, tel que celui-ci est monté serré dans l'alésage.

12. Système selon la revendication précédente, **caractérisé en ce qu'**il comprend un tube d'enroulement (2) monté mobile à rotation sur le flasque (7b) ou sur un palier (14) du flasque,

13. Système selon l'une des revendications 11 ou 12, **caractérisé en ce qu'**il comprend un actionneur (4) de manoeuvre du tube d'enroulement, en particulier un actionneur de manoeuvre du tube d'enroulement disposé à une extrémité du tube d'enroulement, l'actionneur de manoeuvre étant par exemple alimenté par le dispositif d'alimentation, celui-ci étant disposé à l'autre extrémité du tube d'enroulement.

14. Système selon l'une des revendications 11 à 13, **caractérisé en ce que** le flasque comprend un couvercle (72) obturant l'alésage.

## Patentansprüche

1. Stützelement (12) einer Versorgungsvorrichtung (5), die ein Element zur Speicherung von elektrischer Energie (6) umfasst und zur Versorgung eines Aktuators (4) zur Betätigung einer beweglichen Abschirmung (3) bestimmt ist, wobei der Aktuator die Drehbewegung einer Antriebsweller hervorruft, wobei das Stützelement einen Körper (120) umfasst, der mit einer Bohrung (125) versehen ist, die dazu bestimmt ist, wenigstens einen Teil der Versorgungsvorrichtung aufzunehmen, **dadurch gekennzeichnet, dass** das Stützelement auf wenigstens einem Teil des Körpers einen Längsschlitz (126) umfasst, wobei der Längsschlitz (126) die leichte Verformung des Körpers zur Einführung der Versorgungsvorrichtung, und wenn die Versorgungsvorrichtung selbst in die Bohrung eingeführt wird, erlaubt.

2. Stützelement nach dem vorhergehenden Anspruch, **dadurch gekennzeichnet, dass** es eine Stützstange (128) umfasst.

3. Stützelement nach dem vorhergehenden Anspruch, **dadurch gekennzeichnet, dass** sich die Stützstange wenigstens teilweiseentlang des Körpers erstreckt und dem Längsschlitz diametral gegenüberliegt.

4. Stützelement nach einem der Ansprüche 2 oder 3, **dadurch gekennzeichnet, dass** sich die Stützstange um wenigstens das Zweifache der Länge des Körpers über den Körper hinaus erstreckt.

5. Stützelement nach einem der vorhergehenden Ansprüche, **dadurch gekennzeichnet, dass** es ein Kopfstück (122) umfasst, das Greifausschnitte (129) umfasst.

6. Stützelement nach einem der vorhergehenden Ansprüche, **dadurch gekennzeichnet, dass** es Rillen (130), insbesondere Längsrillen, auf seinem Außendurchmesser umfasst.

7. Stützelement nach einem der vorhergehenden Ansprüche, **dadurch gekennzeichnet, dass** die Bohrung Rillen, insbesondere Längsrillen, umfasst.

8. Stützelement nach einem der vorhergehenden Ansprüche, **dadurch gekennzeichnet, dass** der Körpereinen konischen äußeren Abschnittumfasst, insbesondere einen konischen äußeren Abschnitt an einem seiner Enden, speziell einen konischen äußeren Abschnitt am dem Kopfstück gegenüberliegenden Ende.

9. Anordnung, welche ein Stützelement (12) nach einem der vorhergehenden Ansprüche und eine Versorgungsvorrichtung (5) umfasst, die wenigstens ein Element (6) zur Speicherung von elektrischer Energieumfasst, wobei die Versorgungsvorrichtung ein Formelement umfasst, das dazu bestimmt ist, mit dem Stützelement zusammenzuwirken, und insbesondere die Versorgungsvorrichtung ein Formelement umfasst, das das zu der Bohrung (125) und/oder zu dem Schlitz (126) komplementär ist.

10. Anordnung nach dem vorhergehenden Anspruch, **dadurch gekennzeichnet, dass** die Versorgungsvorrichtung wenigstens eine elektrische Leitung (61) umfasst, die entlang des wenigstens einen Speicherelements von einer ihrer Anschlussklemmen an einem Ende der Versorgungsvorrichtung zum anderen Ende der Versorgungsvorrichtung verläuft, wobei die elektrische Leitung eine lokale Überdicke (62) erzeugt, die im Schlitz des Stützelements aufgenommen wird.

11. Motorisch angetriebenes Betätigungssystem (1), das zur Betätigung einer aufrollbaren beweglichen Abschirmung (3) bestimmt ist und einen Lagerschild (7b) umfasst, der eine Bohrung (71) aufweist, die eine Anordnung nach einem der Ansprüche 9 oder 10 aufnimmt, so wie diese in die Bohrung eingepasst ist.

12. System nach dem vorhergehenden Anspruch, **dadurch gekennzeichnet, dass** es ein Aufrollrohr (2) umfasst, das drehbeweglich an dem Lagerschild (7b) oder an einem Lager (14) des Lagerschilds angebracht ist.

13. Systemnach einem der Ansprüche 11 oder 12, **dadurch gekennzeichnet, dass** es einen Aktuator (4) zur Betätigung des Aufrollrohres, insbesondere einen Aktuator zur Betätigung des Aufrollrohres, der an einem Ende des Aufrollrohres angeordnet ist, umfasst, wobei der Betätigungsaktuator zum Beispiel von der Versorgungsvorrichtung gespeist wird, wobei diese am anderen Ende des Aufrollrohres angeordnet ist.

14. Systemnach einem der Ansprüche 11 bis 13, **dadurch gekennzeichnet, dass** der Lagerschild einen Deckel (72) umfasst, der die Bohrung verschließt.

## Claims

1. Element (12) for holding a power supply device (5) comprising an element for storing electrical energy and for supplying power to an actuator (4) for controlling a movable screen (3), the actuator causing a drive shaft to rotate, the holding element comprising a body (120) provided with a hole (125) for receiving at least part of the power supply device, **characterised in that** the holding element comprises a longitudinal slit (126) on at least part of the body, the longitudinal slit (126) enabling easy deformation of the body for the insertion of the power supply device and as said power supply device is inserted in the hole.

2. Holding element according to the preceding claim, **characterized in that** it comprises a holding rod (128).

3. Holding element according to the preceding claim, **characterized in that** the holding rod extends at least in part along the length of the body and is diametrically opposite the longitudinal slit.

4. Holding element according to one of Claims 2 or 3, **characterized in that** the holding rod extends beyond the body over at least twice the length of the body.

5. Holding element according to one of the preceding claims, **characterized in that** it comprises a head (122) comprising gripping notches (129).

6. Holding element according to one of the preceding claims, **characterized in that** it comprises splines (130), in particular longitudinal splines, on the outer diameter thereof.

7. Holding element according to one of the preceding claims, **characterized in that** the hole comprises splines, in particular longitudinal splines.

8. Holding element according to one of the preceding claims, **characterized in that** the body comprises an outer conical portion, in particular an outer conical portion at one of these ends, in particular an outer conical portion at the end opposite the head.

9. Assembly comprising a holding element (12) according to one of the preceding claims and a power supply device (5) comprising at least one electrical energy storage element (6), the power supply device having a geometry for cooperation with the holding element, in particular the power supply device having a geometry that is complementary to the hole (125) and/or to the slit (126).

10. Assembly according to the preceding claim, **characterized in that** the power supply device comprises at least one electrical wire (61) running the length of the at least one storage element from one of the terminals thereof at one end of the power supply device towards the other end of the power supply device, the electrical wire creating a local extra thickness (62) fitting in the slit in the holding element.

11. Motorized control system (1) for controlling a windable movable screen (3) comprising an end-plate (7b) having a hole (71) receiving an assembly according to one of Claims 9 or 10, such that said assembly is held in the hole with a close fit.

12. System according to the preceding claim, **characterized in that** it comprises a winding tube (2) mounted rotatably on the end-plate (7b) or on a bearing (14) of the end-plate.

13. System according to one of Claims 11 or 12, **characterized in that** it comprises an actuator (4) for controlling the winding tube, in particular an actuator for controlling the winding tube arranged at one end of the winding tube, the control actuator being powered for example by the power supply device, this being arranged at the other end of the winding tube.

14. System according to one of Claims 11 to 13, **characterized in that** the end-plate comprises a cover (72) closing the hole.
